# EUROPEAN PATENT APPLICATION

(11) **EP 0 963 028 A2**
(43) Date of publication of application: **08.12.1999**
(21) Application number: 99660093.8
(22) Date of filing: 31.05.1999
(51) Int. Cl.: H02K 1/16, H02K 3/493, H02K 3/24

(54) **Squirrel-cage induction motor**

(30) Priority: 05.06.1998 FI 981291
(71) Applicant: ABB Motors Oy, 65320 Vaasa (FI)
(72) Inventor: Haring, Tapio, 65370 Vaasa (FI); Ikäheimo, Jouni, 61310 Panttila (FI)
(74) Representative: Kaukonen, Juha Veikko

(57) **Abstract**

A squirrel-cage induction motor comprising a rotor (2) and a stator (1) placed outside the rotor, and a stator winding formed in the stator (1). The stator (1) frame is provided with winding slots (3) to which winding conductors (9) for the stator winding are placed. The winding slots (3) are formed on the outer surface of the stator (1) frame, and the winding conductors (9) are placed at the bottom of the winding slots (3). The winding slots (3) are closed by wedge-shaped slot wedges (10).

## Description

The invention relates to a squirrel-cage induction motor comprising a rotor and a stator placed outside the rotor, and a stator winding formed in the stator where the frame of the stator is provided with winding slots to which winding conductors for the stator winding are placed.

In stator windings in electric machines, the inner surface of the stator frame between stator teeth is provided with punched winding slots for receiving the stator winding either as a winding that is wound directly in the slots or as a preformed winding. Conductors of the windings that are wound directly in the slots are placed straight in the slots without preforming them first into their final shape. In a preformed winding, the conductors are bent into their correct form in a coil model, whereafter the winding is placed in the slots.

In the stator frame, the surface between the winding slots and the stator teeth is insulated with slot insulation which usually consists of an outer and an inner slot insulation. The inner slot insulation forms a V-shaped groove, opening downwards, which protects the conductors and through which the conductors can be easily slid to the bottom of the slot. When the conductors are in place in the winding slot, the slot is closed with a closing strip or a thin slot wedge that is situated approximately at the same level with the inner surface of the stator frame. A narrow air gap remaining between the stator frame and the rotor is designed in view of, for example, the required cooling and the occurring thermal expansion in order that the rotor is able to rotate. In order to avoid overheating, motors usually comprise both a fan and jacket ventilation provided with cooling fins.

However, there are considerable problems related to the prior art stator winding. An internal stator winding must be usually implemented manually, and slot insulations are also fitted at the same time. When electric machines are assembled, this is a slow and time-consuming stage that increases the costs and the assembly time.

It would be optimal for the operation of the squirrel-cage induction motor that the magnetic flux passing through the stator and the rotor were as even as possible. However, in squirrel-cage induction motors some variation always occurs in the magnetic flux, resulting for example from harmonics of the magnetic flux generated by the stator current in the air gap. These harmonics cause errors in the operation of the squirrel-cage induction motor as they produce synchronous and asynchronous torques as well as vibration and sound effects.

The occurrence of vibration and sound effects is also dependent on the mechanical structure of the stator. In an internal stator winding, the stator teeth between the winding slots are rather short, wherefore they have a high oscillating frequency. This also affects the occurrence of sound effects. The winding slots are closed by means of either a closing strip or a thin slot wedge, which cannot be used, however, to effectively withstand the strains acting on the stator teeth due to their weak mechanical structure.

The aforementioned drawbacks can be avoided with the present invention. More accurately, the invention is characterized in that the winding slots are formed on the outer surface of the stator frame. The invention is based on the winding slots being placed on the outer and not on the inner surface of the stator frame, which means that the winding is positioned at the bottom of the winding slot, thus facilitating substantially the winding of the stator. Further, the idea of a preferred embodiment of the invention is that the winding slots are closed by slot wedges that are preferably made of a magnetic material. The idea of another preferred embodiment is that ventilating ducts are formed between a slot wedge and winding conductors and/or in the slot wedge itself.

The invention provides considerable advantages. An external stator winding can be implemented by means of a winding apparatus, which substantially expedites the stage of operation. The thin strip of the stator frame between the bottom of the winding slot and the air gap curbs the variation of the magnetic flux in the air gap, thus improving the characteristics of the motor. When a magnetic material is used in the slot wedges, the magnetic field generated by the stator winding can be directed more advantageously towards the rotor. The stator winding according to the invention can be made mechanically very strong. Furthermore, the arrangement according to the invention enables the formation of additional ventilating ducts in the stator.

In the following, the invention will be described in greater detail with reference to the accompanying drawings, in which
Figure 1 is a simplified cross-sectional view of a part of a prior art squirrel-cage induction motor, and
Figure 2 is a simplified cross-sectional view of a part of a squirrel-cage induction motor according to a preferred embodiment of the invention.

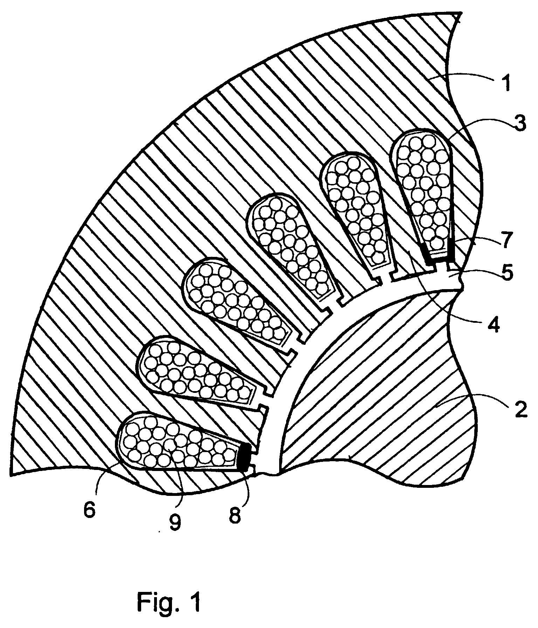

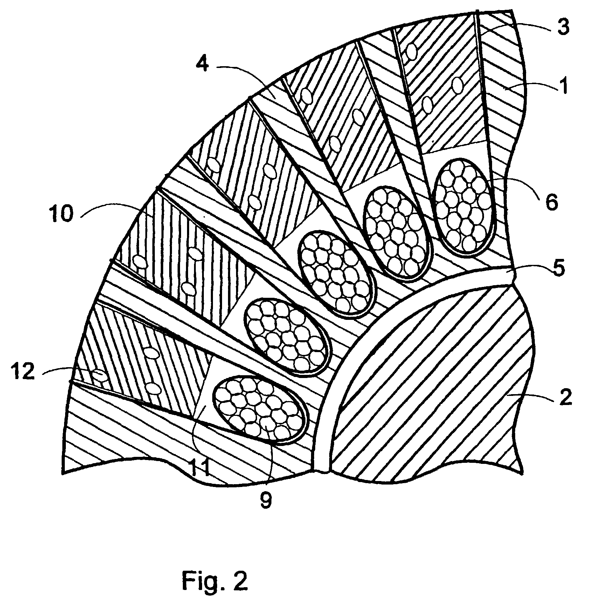

Figures 1 and 2 show, in a simplified manner, only those parts of the squirrel-cage induction motor that are essential to the understanding and implementation of the invention. Therefore, for example the motor control electronics, the connections, the fan and the cooling fins are not shown in Figures 1 and 2.

A prior art stator winding is implemented, as shown in Figure 1, on the inner surface of the stator 1 frame, such that winding conductors 9 are placed in winding slots 3 punched between stator teeth 4. A thin air gap 5 is left between the stator 1 and the rotor 2. The winding slots are insulated from the stator frame by a slot insulation 6, and after the conductors have been placed in the slots they are closed either by a closing strip 7 or a slot wedge 8. Figure 1 shows, by way of example, both ways of closing a winding slot, but in practice only one of them is used in the stator.

In the following, the invention will be described in greater detail based on Figure 2, which shows a stator 1 provided on its outer surface with winding slots 3. Stator teeth 4 are provided between the winding slots. Winding conductors 9 are placed at the bottom of the winding slots and insulated from the stator frame by slot insulations 6. The winding slots are closed by elongated slot wedges 10, and a ventilating duct 11 may preferably be formed between the slot wedge and the winding conductors. The slot wedge can also be provided with ventilating ducts 12. An air gap 5 is naturally provided between the stator and the rotor 2.

Since the winding slots are situated on the outer surface of the stator frame, the winding construction according to the invention enables the use of a winding apparatus, which is cost-effective and also expedites the assembly time of the motor.

The winding slots are wedge-shaped, narrowing towards the inner surface of the stator, and they are substantially longer than the winding slots used in an internal winding. Since the winding slots extend almost through the entire stator frame and the winding conductors are placed at the bottom of the winding slot, the position of the winding with respect to the rotor is substantially the same as in an internal stator winding. However, in the arrangement according to the invention a narrow strip of the stator frame remains between the winding conductors and the air gap, which curbs the variation of the magnetic flux in the air gap, for example by reducing the dissipation resulting from the flux variation and the interference caused by the harmonics. Due to the greater length of the winding slots, the stator teeth are also longer, which means that a change in the oscillating frequency of the stator teeth reduces the magnetic sound of the motor.

The winding slots are closed by means of elongated, wedge-shaped slot wedges placed in the slots. The slot wedges can be arranged in direct contact with the winding, or a ventilating duct can be left between the slot wedge and the winding, if necessary. Ventilating ducts can preferably be provided also in the structure of the slot wedges. Due to the construction according to the invention, the slot wedges produce tangential pressure on the outer surface of the stator, which makes the structure mechanically very strong. Further, the wedges can be manufactured preferably from a material that dampens oscillation, which also improves the mechanical structure of the motor.

The slot wedges can preferably be made from a magnetic material, so that magnetic slot wedges provided at the outer circumference of the stator shape advantageously the magnetic field generated by the stator winding. In such a case, the magnetic slot wedge is a contributory factor in the stronger orientation of the magnetic field generated by the stator winding towards the rotor, thus improving the efficiency of the motor. The slot wedges can preferably be made of, for example, a sintered magnetic material, such as different ferrite composites.

It is clear for a person skilled in the art that the invention can be implemented in several different manners. Therefore the invention and the embodiments thereof are not restricted only to the examples described above, but they may vary within the scope of the claims.

## Claims

1. A squirrel-cage induction motor comprising a rotor (2) and a stator (1) placed outside the rotor, and a stator winding formed in the stator (1) where the frame of the stator (1) is provided with winding slots (3) to which winding conductors (9) for the stator winding are placed, **characterized** in that the winding slots (3) are formed on the outer surface of the stator frame.

2. A squirrel-cage induction motor according to claim 1, **characterized** in that the winding slots (3) extend substantially close to the inner surface of the stator (1) frame, and that the winding conductors (9) are placed at the bottom of the winding slots (3).

3. A squirrel-cage induction motor according to claim 1 or 2, **characterized** in that each winding slot (3) is closed by a wedge-shaped slot wedge (10).

4. A squirrel-cage induction motor according to claim 3, **characterized** in that the slot wedge (10) has an elongated shape.

5. A squirrel-cage induction motor according to claim 3 or 4, **characterized** in that a ventilating duct (11) is formed between the slot wedge (10) and the winding conductors (9).

6. A squirrel-cage induction motor according to any one of claims 3 to 5, **characterized** in that the slot wedge (10) is provided with at least one ventilating duct (12).

7. A squirrel-cage induction motor according to any one of claims 3 to 6, **characterized** in that the slot wedge (10) is formed of a material that dampens oscillation.

8. A squirrel-cage induction motor according to any one of claims 3 to 7, **characterized** in that the slot wedge (10) is formed of a magnetic material.
